# EUROPEAN PATENT SPECIFICATION

(11) **EP 2 205 530 B1**
(45) Date of publication and mention of the grant of the patent: **06.04.2011**
(21) Application number: 08803308.9
(22) Date of filing: 28.08.2008
(51) Int. Cl.: C02F 1/42, D06F 1/00, C02F 1/00

(54) **DEVICE TO DECALCIFY WATER IN IRONING APPARATUSES AND RELATIVE METHOD**
VORRICHTUNG ZUM ENTKALKEN VON WASSER IN BÜGELAPPARATEN UND ZUGEHÖRIGES VERFAHREN
PROCÉDÉ ET DISPOSITIF POUR DÉCALCIFIER L'EAU UTILISÉE DANS LES FERS À REPASSER

(30) Priority: 06.09.2007 IT UD20070157
(43) Date of publication of application: 14.07.2010
(73) Proprietor: De'Longhi SpA, 31100 Treviso (IT)
(72) Inventor: DE' LONGHI, Giuseppe, I-31100 Treviso (IT)
(74) Representative: Petraz, Davide Luigi
(86) International application number: PCT/EP2008/061282
(87) International publication number: WO 2009/030633

(56) References cited:
- EP-A- 0 574 602
- WO-A-2006/095282
- DE-U1- 20 020 600
- FR-A- 2 850 677

## Description

### FIELD OF THE INVENTION

The present invention concerns a device and a method to decalcify water, particularly suitable to be used in ironing apparatuses, to prevent the water used to generate steam for ironing from causing the formation of scale.

### BACKGROUND OF THE INVENTION

One of the main problems in ironing apparatuses which use water or steam is the formation of scale inside them, caused by the excessive hardness of the water circulating therein. In particular, as time passes, the water used causes the formation of scale encrustations inside the apparatus, especially in the boiler. These encrustations initially reduce the performance of the ironing apparatus and subsequently make it completely unusable. The functioning life of the apparatus therefore depends on the level of hardness of the water used: the harder the water, the shorter the life of the apparatus.

To obviate this problem, at present, ironing apparatuses on the market use various solutions.

One known solution provides that the user of the ironing apparatus must wash the boiler periodically. The boiler is washed by pouring a specific compound of the type that prevents the formation of scale, or reacts with the scale already present, based on citric acid or lactic acid, through a hole connected to the boiler, normally provided with a stopper, and present in the bottom or in a side of the apparatus.

This operation may not be easy, however, and may therefore be carried out by the user incorrectly, which entails that the apparatus may be only partly and incompletely descaled. In this way, small pieces of scale may not be eliminated and may even enter into circulation in the hydraulic system of the ironing apparatus with the risk of obstructing it or blocking the critical components.

Another known solution to the problem of the formation of scale encrustations consists in using, inside the ironing apparatus, filters with partly or totally demineralizing resins. These have the function of decalcifying the water by exploiting the chemical properties of the resins, whose ions react with the substances dissolved in the water. In this way the water, once filtered, enters into the boiler with a lower level of hardness than the original, considerably reducing the possibility of scale formation. This known solution also has disadvantages, however. Indeed, after treating a limited quantity of water, the filters must be replaced and often they are difficult to find as spare parts. Moreover, when the water used in the ironing apparatus has a high level of hardness, the filters must be replaced frequently, with a consequent increase in the management costs. Finally, but no less important, these filters are of the disposable type, and every time they are replaced they become waste, thus causing a serious environmental impact.

Purpose of the present invention is to achieve a device to decalcify water by means of one or more resin filters, to reduce the formation of scale inside ironing apparatuses, which is economical, which does not need to be replaced and thrown away as waste and which therefore has a reduced environmental impact.

The Applicant has devised and perfected the present invention to overcome the shortcomings of the state of the art and to obtain these and other purposes or advantages.

### SUMMARY OF THE INVENTION

The present invention is set forth and characterized in the independent claims, while the dependent claims describe other characteristics of the invention or variants to the main inventive idea.

In accordance with the above purposes, a device according to the present invention, able to be used to decalcify the water used in an ironing apparatus, comprises at least a filter containing resin. The resin is able to react with the substances suspended and dissolved in the water, decalcifying it.

According to a characteristic feature of the present invention, the resin used is of the regeneratable type, such as for example those marketed under the trademark Lewatit® S 8227, which is a weak carboxyl cationic resin typically used in decarbonation processes, or the trademarks Purolite® D4752 and Purolite® C104. These resins are regenerated both with strong acids and also with weak acids.

The use of this type of resin allows it to be regenerated, also automatically, at predefined intervals, according to the quantity of water used and its level of hardness, so that it can be re-used without needing to be replaced and thrown away. This gives a considerable advantage from both the economic and also the environmental point of view.

The filter is able to be mounted permanently or removably inside the ironing apparatus and is able to be connected to a water tank of the ironing apparatus.

The resin contained in the filter is able to be regenerated by means of a solution introduced inside the tank. The solution is able to flow inside the filter for a time comprised between about 40 minutes and about 80 minutes and comprises water and a weak acid, for example citric acid, with a concentration comprised between about 10% and about 20%, advantageously 13%. This is an acid easily found on the market, it does not entail any problem of toxicity or corrosiveness, unlike strong acids, for example sulphuric or hydrochloric acid, and can therefore be easily used and managed by the user of the ironing apparatus.

According to a variant of the present invention the solution comprises water and common salt, with a concentration comprised between about 10% and about 20%, advantageously 13%.

According to another variant of the present invention, a support mean, comprising a cavity having sizes correlated to those of the filter, to contain it, is able to support the filter. The support mean is also able to support said water tank, removed from the ironing apparatus. In this way the regeneration takes place outside the apparatus.

According to a variant of the present invention, the device comprises, or is associated with, means able to identify the state of the resin so as to be able to determine the moment when to subject it to regeneration, possibly also automatically.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows schematically and in section a device according to the present invention mounted in an ironing apparatus;
- fig. 2 is a view from above of a detail of the device in fig. 1;
- fig. 3 is a section from III to III of fig. 2;
- fig. 4 is a section from IV to IV of fig. 2;
- fig. 5 is an enlargement of a detail of fig. 4;
- fig. 6 is a section from VI to VI of fig. 2;
- fig. 7 is a view from above of a detail of the device in fig. 1;
- fig. 8 is a lateral view of the detail in fig. 6; and
- fig. 9 is a front view of the detail in fig. 6.

### DETAILED DESCRIPTION OF A PREFERENTIAL FORM OF

### EMBODIMENT

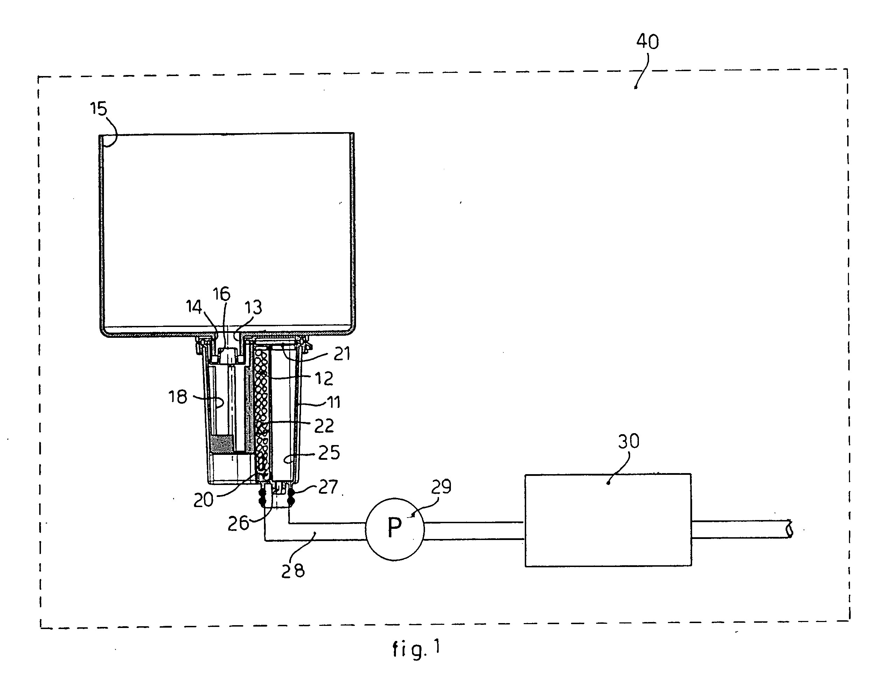

With reference to fig. 1, a device 10 according to the present invention is used to decalcify the water, to be transformed into steam, in an ironing apparatus 40. The latter may be of any known type and therefore is not described in detail here.

The device 10 comprises a filter 11, for example made of plastic material, on whose upper side a cylindrical cavity 13 is made, which constitutes the housing for a first mouth 14 of a water tank 15 of the ironing apparatus 40.

The cylindrical cavity 13 is provided inside with a first sleeve 16 disposed coaxial therewith and which develops upward.

The first sleeve 16 is able to be inserted in the first mouth 14 so as to guarantee a stable connection of the filter 11 with the water tank 15. The sleeve 16 is able to convey the water arriving from the water tank 15 inside a central compartment 18, made inside the filter 11.

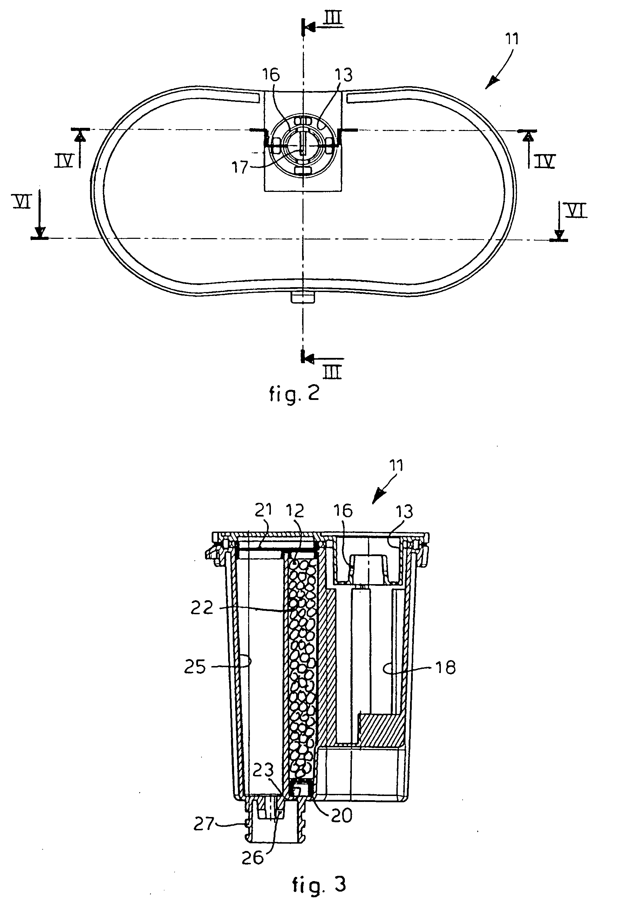

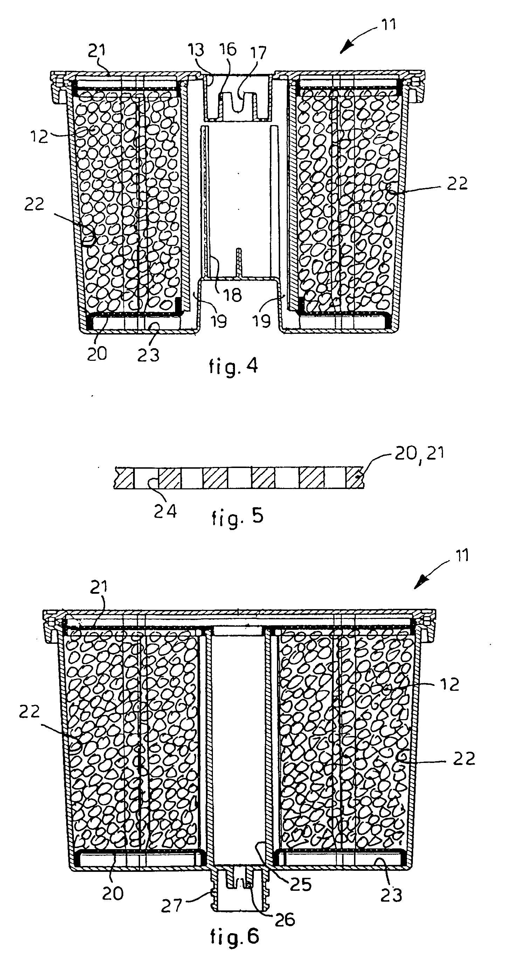

The first sleeve 16 is also provided with a calibrated hole 17 (figs. 2 and 4) able to slow down the stream of water, or of a solution, able to be introduced into the filter 11, as will be explained in more detail hereafter.

The filter 11 is shaped so as to define two lateral channels 19 which put the central compartment 18 in communication with the lower part of the filter 11, in which there is a first containing grid 20, whose edge is shaped so as to form a substantially U-shaped profile facing downward. The containing grid 20 thus conformed defines a lower compartment 23.

A second containing grid 21 is disposed parallel to the first in the upper part of the filter 11 and is attached to the internal wall of the filter 11.

The two containing grids 20 and 21 define a compartment 22, and are able to contain and block inside the latter a resin 12, of the regeneratable type, consisting of balls having a diameter comprised between about 0.20 mm and about 0.30 mm.

Moreover, the containing grids 20 and 21 comprise a plurality of slits 24 (fig. 5) smaller than said balls, for example less than 0.20 mm and able to allow the water to pass.

The filter 11 also comprises a rear compartment 25, through which the decalcified water is able to flow toward the outside.

In the lower part of the rear compartment 25, there is a second sleeve 26, which constitutes a narrowing of the rear compartment 25. The second sleeve 26 develops downward inside a second mouth 27, present in the lower part of the filter 11. The second sleeve 26 is able to make the decalcified water flow through a pipe 28 (fig. 1). The latter is inserted into the second mouth 27 and connects the filter 11 to a pump 29 of the ironing apparatus 40. The pump 29 is able to take in the water present in the water tank 15, to make it flow through the filter 11 and to transfer it to a boiler 30 able to transform it into steam needed for ironing.

The device 10 as described heretofore functions as follows. The water to be decalcified and needed to form the steam for ironing is introduced into the water tank 15 and from here inside the filter 11, before being transferred to the boiler 30. The water taken in by the pump 29 flows into the central compartment 18 through the calibrated hole 17 of the sleeve 16. The water first reaches the lower compartment 23, through the two lateral channels 19, and then, through the slits 24 of the first containing grid 20, the compartment 22, inside which the balls of regeneratable resin 12 are disposed. The water then rises through the compartment 22, where it is subjected to the decalcifying effect of the resin 12. The water then exits from the compartment 22 through the slits 24 of the second containing grid 21 and reaches the rear compartment 25. Here the completely decalcified water flows downward so as to exit from the filter 11, through the second sleeve 26, and reach the pump 29 through the pipe 28.

The regeneration of the resin 12 contained in the filter 11 is performed by making a particular solution, for example water and citric acid, pass through the resin, in an indicative time comprised between about 40 minutes and about 80 minutes, advantageously 60 minutes. The solution, like the water necessary to generate the steam for ironing, is introduced into the water tank 15 and from here into the filter 11. The solution is made to flow freely inside the filter 11 through the calibrated hole 17, which slows down the flow of the solution in order to allow the reaction between the acid and the resin 12 to take place. The solution follows the same route previously described for the water.

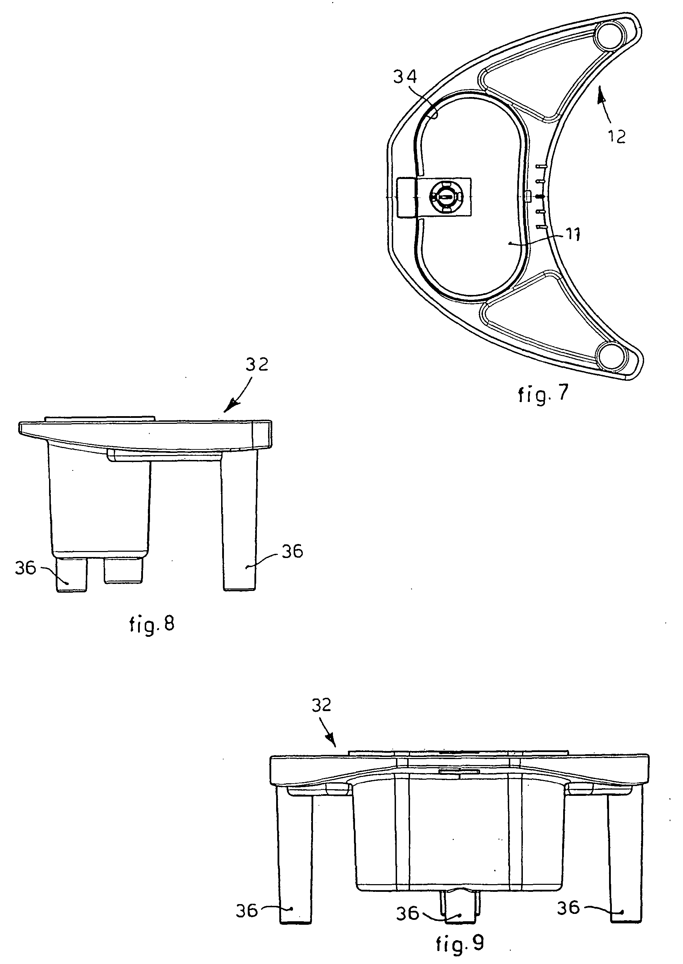

According to a variant of the present invention, both the filter 11 and the water tank 15 are removable. In this case, to effect the regeneration, a support mean 32 is provided (figs. 7 to 9) able to support the filter 11 and the water tank 15. The support mean 32 has a cavity 34, having sizes correlated to those of the filter 11, able to contain the filter 11, and three supports 36, able to support the filter 11 and the water tank 15, removed from the ironing apparatus 40.

It is clear that modifications and/or additions of parts may be made to the device as described heretofore, without departing from the field and scope of the present invention.

It is also clear that, although the present invention has been described with reference to a specific example, a person of skill in the art shall certainly be able to achieve many other equivalent forms of device to decalcify water, to be transformed into steam, by means of a resin filter, having the characteristics as set forth in the claims and hence all coming within the field of protection defined thereby.

## Claims

1. Device to decalcify the water used in an ironing apparatus (40) comprising at least a filter (11) containing resin (12), a water tank (15) connected to said filter (11), a pump (29) and a boiler (30), the filter (11) being located between the water tank (15) and the boiler (30), **characterized in that** said resin (12) is a weak carboxyl cationic resin regeneratable by means of a solution selectively introduced into said water tank (15), and from it to said filter (11), wherein said solution comprises either water and a weak acid, or water and common salt, wherein said filter (11) comprises at least a first sleeve (16) firmly connecting said filter (11) to said water tank (15) and provided with a calibrated hole (17) for slowing down said solution when it is introduced into said filter (11), and a second sleeve (26) for connecting said filter (11) to a pipe (28) through which the water may flow towards said boiler (30).

2. Device as in claim 1, **characterized in that** said filter (11) is mounted permanently or removably inside said ironing apparatus (40).

3. Device as in claim 1, **characterized in that** said resin consists of balls having a diameter comprised between about 0.20 mm and about 0.30 mm.

4. Device as in claim 1, **characterized in that** it also comprises a support mean (32) able to support said filter (11), said support mean (32) comprising a cavity (34) having sizes correlated to those of said filter (11) in order to contain said filter (11).

5. Device as in claims 1 and 4, **characterized in that** said support mean (32) is also able to support said water tank (15), removed from said ironing apparatus (40), so as to perform the regeneration of the resin outside said apparatus (40).

6. Device as in claim 1, **characterized in that** it comprises, or is associated with, means able to identify the state of said resin (12) of said filter (11).

7. Device as in claim 1, **characterized in that** it comprises, or is associated with, means able to automatically regenerate said resin (12) of said filter (11).

8. Device as in any claim hereinbefore, **characterized in that** said filter (11) comprises at least two containing grids (20, 21), disposed parallel to each other so as to form a compartment (22) in which said resin (12) is able to be disposed.

9. Method to decalcify the water used in an ironing apparatus (40) which employs at least a filter (11) containing resin (12), a water tank (15) connected to said filter (11), a pump (29) and a boiler (30), the filter (11) being located between the water tank (15) and the boiler (30), **characterized in that** it comprises at least a step wherein the resin contained in the filter (11) is regenerated by means of a solution introduced inside said water tank (15) through a calibrated hole (17) for slowing down said solution when it is introduced into said filter (11), the calibrated hole (17) being provided in a first sleeve (16) firmly connecting said filter (11) to said water tank (15), the solution going from the tank (15) to said filter (11), wherein said solution is made to flow inside said filter (11) for a time comprised between about 40 minutes and about 80 minutes, and wherein said solution comprises either water and a weak acid, or water and common salt.

10. Method as in claim 9, **characterized in that** it provides to use a citric acid, with a concentration in the solution comprised between about 10% and about 20%, advantageously 13%.

11. Method as in claim 9, **characterized in that** it provides to use a common salt, with a concentration in the solution comprised between about 10% and about 20%, advantageously 13%.

## Patentansprüche

1. Vorrichtung zur Entkalkung von in einem βügelgerät (40) verwendeten Wasser, mit: mindestens einem Harz (12) enthaltenden Filter (11), einem mit dem Filter (11) verbundenen Wasserbehälter (15), einer Pumpe (29) und einem Boiler (30), wobei sich der Filter (11) zwischen dem Wasserbehälter (15) und dem Boiler (30) befindet, **dadurch gekennzeichnet, dass** das Harz (12) ein schwachsaures kationisches Harz ist, welches mittels einer Lösung, die selektiv in den Wasserbehälter (15) und von hier zum Filter (11) geführt wird, regenerierbar ist, wobei die Lösung entweder Wasser und eine schwache Säure oder Wasser und ein gewöhnliches Salz enthält, wobei der Filter (11) zumindest eine erste Hülse bzw. Muffe (16) aufweist, welche den Filter (11) fest mit dem Wasserbehälter (15) verbindet und mit einem kalibrierten Loch (17) versehen ist, um die Lösung bei Einführung in den Filter (11) zu verlangsamen, sowie eine zweite Hülse bzw. Muffe (26) zum Verbinden des Filters (11) mit einer Leitung (28), durch welche das Wasser zum Boiler (30) fließen kann.

2. Vorrichtung nach Anspruch 1, **dadurch gekennzeichnet, dass** der Filter (11) dauerhaft oder entfernbar innerhalb des Bügelgeräts (40) angebracht ist.

3. Vorrichtung nach Anspruch 1, **dadurch gekennzeichnet, dass** das Harz aus Kügelchen mit einem Durchmesser, der zwischen etwa 0,20 mm und etwa 0,30 mm liegt, besteht.

4. Vorrichtung nach Anspruch 1, **dadurch gekennzeichnet, dass** diese weiterhin ein Trägerelement (32) aufweist, welches den Filter (11) tragen kann, wobei das Trägerelement (32) einen Hohlraum (34) mit Größen, die denjenigen des Filters (11) entsprechen, aufweist, um den Filter (11) aufzunehmen.

5. Vorrichtung gemäß den Ansprüchen 1 und 4, **dadurch gekennzeichnet, dass** das Trägerelement (32) weiterhin den Wasserbehälter (15) tragen kann, welcher aus dem Bügelgerät (40) entfernt ist, um eine Regenerierung des Harzes außerhalb des Geräts (40) durchzuführen.

6. Vorrichtung nach Anspruch 1, **dadurch gekennzeichnet, dass** sie eine Einrichtung zur Identifizierung des Zustands des Harzes (12) oder des Filters (11) aufweist oder damit verbunden ist.

7. Vorrichtung nach Anspruch 1, **dadurch gekennzeichnet, dass** sie eine Einrichtung zur automatischen Regenerierung des Harzes (12) oder des Filters (11) aufweist oder damit verbunden ist.

8. Vorrichtung r.ach einem der vorhergehenden Ansprüche, **dadurch gekennzeichnet, dass** der Filter (11) mindestens zwei Haltegitter (20, 21) aufweist, welche parallel zueinander derart angeordnet sind, dass eine Kammer (22) gebildet wird, in welcher das Harz (12) angeordnet werden kann.

9. Verfahren zur Entkalkung von in einem Bügelgerät (40) verwendeten Wasser, bei dem mindestens ein Harz (12) enthaltender Filter (11), ein mit dem Filter (11) verbundener Wasserbehälter (15), eine Pumpe (29) und ein Boiler (30) verwendet werden, wobei sich der Filter (11) zwischen dem Wasserbehälter (15) und dem Boiler (30) befindet, **dadurch gekennzeichnet, dass** es zumindest einen Schritt umfasst, bei dem das in dem Filter (11) enthaltene Harz mittels einer Lösung regeneriert wird, welche durch ein kalibriertes Loch (17) zum Verlangsamen der Lösung bei dessen Einführung in den Filter (11) in den Wasserbehälter (15) eingeführt wird, wobei das kalibrierte Loch (17) in einer ersten Hülse bzw. Muffe (16) vorgesehen ist, welche den Filter (11) fest mit dem Wasserbehälter (15) verbindet, wobei sich die Lösung von dem Behälter (15) zu dem Filter (11) bewegt, wobei die Lösung in dem Filter (11) für eine Zeit zwischen etwa 40 Minuten und etwa 80 Minuten fließen gelassen wird, und wobei die Lösung entweder Wasser und eine schwache Säure oder Wasser und ein gewöhnliches Salz enthält.

10. Verfahren nach Anspruch 9, **dadurch gekennzeichnet, dass** es vorsieht, eine Zitronensäure mit einer Konzentration in der Lösung zwischen etwa 10 % und etwa 20 %, bevorzugt 13 %, zu verwenden.

11. Verfahren nach Anspruch 9, **dadurch gekennzeichnet, dass** es vorsieht, ein gewöhnliches Salz mit einer Korkentration in der Lösung zwischen etwa 10% und etwa 20 %, bevorzugt 13 %, zu verwenden.

## Revendications

1. Dispositif pour décalcifier l'eau utilisée dans un fer à repasser (40) comprenant au moins un filtre (11) contenant de la résine (12), un réservoir d'eau (15) raccordé audit filtre (11), une pompe (29) et une chaudière (30), le filtre (11) étant positionné entre le réservoir d'eau (15) et la chaudière (30), **caractérisé en ce que** ladite résine (12) est une résine cationique carboxylique fragile pouvant se régénérer au moyen d'une solution introduite de manière sélective dans ledit réservoir d'eau (15) et à partir de ce dernier jusqu'audit filtre (11), dans lequel ladite solution comprend de l'eau et un acide faible, ou de l'eau et un sel commun, dans lequel ledit filtre (11) comprend au moins un premier manchon (16) raccordant fermement ledit filtre (11) audit réservoir d'eau (15) et prévu avec un trou calibré (17) pour ralentir ladite solution lorsqu'elle est introduite dans ledit filtre (11), et un deuxième manchon (26) pour raccorder ledit filtre (11) à un tuyau (28) à travers lequel l'eau peut s'écouler vers ladite chaudière (30).

2. Dispositif selon la revendication 1, **caractérisé en ce que** ledit filtre (11) est monté de manière permanente ou de manière amovible à l'intérieur dudit fer à repasser (40),

3. Dispositif selon la revendication 1, **caractérisé en ce que** ladite résine se compose de billes ayant un diamètre compris entre environ 0,20 mm et environ 0,30 mm.

4. Dispositif selon la revendication 1, **caractérisé en ce qu'**il comprend également des moyens de support (32) pouvant supporter ledit filtre (11), lesdits moyens de support (32) comprenant une cavité (34) ayant des tailles corrélées à celles dudit filtre (11) afin de contenir ledit filtre (11).

5. Dispositif selon les revendications 1 et 4, **caractérisé en ce que** lesdits moyens de support (32) peuvent également supporter ledit réservoir d'eau (15), retiré dudit fer à repasser (40), afin de réaliser la régénération de la résine à l'extérieur dudit fer (40).

6. Dispositif selon la revendication 1, **caractérisé en ce qu'**il comprend ou est associé avec des moyens pouvant identifier l'état de ladite résine (12) dudit filtre (11).

7. Dispositif selon la revendication 1, **caractérisé en ce qu'**il comprend ou est associé avec des moyens pouvant régénérer automatiquement ladite résine (12) dudit filtre (11).

8. Dispositif selon l'une quelconque des revendications précédentes, **caractérisé en ce que** ledit filtre (11) comprend au moins deux grilles de confinement (20, 21), disposées parallèlement entre elles afin de former un compartiment (22) dans lequel ladite résine (12) peut être disposée.

9. Procédé pour décalcifier l'eau utilisée dans un fer à repasser (40) qui utilise au moins un filtre (11) contenant de la résine (12), un réservoir d'eau (15) raccordé audit filtre (11), une pompe (29) et une chaudière (30), le filtre (11) étant positionné entre le réservoir d'eau (15) et la chaudière (30), **caractérisé en ce qu'**il comprend au moins une étape dans laquelle la résine contenue dans le filtre (11) est régénérée au moyen d'une solution introduite à l'intérieur dudit réservoir d'eau (15) à travers un trou calibré (17) pour ralentir ladite solution lorsqu'elle est introduite dans ledit filtre (11), le trou calibré (17) étant prévu dans un premier manchon (16) raccordant fermement ledit filtre (11) audit réservoir d'eau (15), la solution allant du réservoir (15) audit filtre (11), dans lequel ladite solution est faite pour s'écouler à l'intérieur dudit filtre (11) pendant une période de temps comprise entre environ 40 minutes et environ 80 minutes, et dans lequel la solution comprend de l'eau et un acide faible ou de l'eau et un sel commun.

10. Procédé selon la revendication 9, **caractérisé en ce qu'**il prévoit d'utiliser un acide citrique avec une concentration dans la solution comprise entre environ 10 et environ 20 %, de manière avantageuse 13 %.

11. Procédé selon la revendication 9, **caractérisé en ce qu'**il prévoit d'utiliser un sel commun, avec une concentration dans la solution comprise entre environ 10 et environ 20 %, de manière avantageuse 13 %.
